# EUROPEAN PATENT APPLICATION

(11) **EP 4 687 319 A1**
(43) Date of publication of application: **04.02.2026**
(21) Application number: 24192086.7
(22) Date of filing: 31.07.2024
(51) Int. Cl.: H04L 9/08, H04L 9/32

(54) **A METHOD AND A SYSTEM FOR CRYPTOGRAPHIC PROTECTION OF A DATA EXCHANGE BETWEEN A FIRST ENTITY AND A SECOND ENTITY**

(71) Applicant: Siemens Aktiengesellschaft, 80333 München (DE)
(72) Inventor: De Santis, Fabrizio, 80634 München (DE); Safieh, Malek, 81539 München (DE)
(74) Representative: Siemens Patent Attorneys

(57) **Abstract**

A method and a system for cryptographic protection of a data exchange between a first entity and a second entity

The invention relates to a method for cryptographic protection of a data exchange between a first entity (A) and a second entity (B), wherein a signing key pair (KPC) belongs to the first entity (A) and a KEM key pair (KPM) belongs to the second entity (B), the method comprising the following steps:
a) signing, by the first entity (A), first data (D1) with a private signing key (SKC) resulting in a first signature (SI1);
b) providing the first entity (A) with a first symmetric key (K1) and a first ciphertext (CT1) using an encapsulation procedure (Encap) of a key encapsulation mechanism, where the encapsulation procedure (Encap) calculates a first shared secret (SS1) and the first ciphertext (CT1) from the public KEM key (PKM);
c) encrypting, by the first entity (A), at least the first signature (SI1) with an encryption procedure (AEAD) which uses the first symmetric key (K1), resulting in a first piece of information (ENC1) comprising the encrypted first signature and data corresponding to the first data (D1);
d) transmitting, by the first entity (A), the first ciphertext (CT1) and the first piece of information (ENC1) to the second entity (B);
e) providing the second entity (B) with the first symmetric key (K1), using a decapsulation procedure (Decap) of the key encapsulation mechanism, where the decapsulation procedure (Decap) calculates the first shared secret (SS1) from the first ciphertext (CT1) and the private KEM key (SKM);
f) decrypting, by the second entity (B), at least the encrypted first signature with a decryption procedure (AEAD⁻¹) which uses the first symmetric key (K1), resulting in the first data (D1) and the first signature (SI1);
g) verifying, by the second entity (B), the first signature (SI1) decrypted in step f) with the public signing key (PKC).

## Description

A method and a system for cryptographic protection of a data exchange between a first entity and a second entity

Independent of the grammatical term usage, individuals with male, female or other gender identities are included within the term.

A key encapsulation mechanism (KEM) is an important primitive that utilizes a public-key algorithm to securely encapsulate and transmit symmetric key material. The encapsulated symmetric key material is then commonly used to encrypt messages, ensuring their confidentiality and/or integrity.

A key encapsulation mechanism consists of a generation procedure, an encapsulation procedure, and a decapsulation procedure. The generation procedure creates the KEM key pair consisting of the public KEM key and the private KEM key. This procedure is typically randomized. I.e., when the generation procedure is called repeatedly, it almost certainly returns a different pair of a public KEM key and a private KEM key every time. Given the public KEM key, the encapsulation procedure of a key encapsulation mechanism creates a random symmetric key from the public KEM key and a corresponding ciphertext and returns both values. Given the private KEM key of the KEM key pair and the ciphertext obtained by the encapsulation procedure, the decapsulation procedure returns the symmetric key generated by the encapsulation procedure with high probability.

Post-quantum cryptography refers to the development of cryptographic algorithms and particularly public-key algorithms that are secure against cryptographic attacks by a quantum computer. Post-quantum cryptography will ultimately replace pre-quantum public-key algorithms such as RSA (RSA = Rivest-Shamir-Adleman) or ECC (ECC = Elliptic Curve Cryptography). In a transition phase from pre-quantum cryptography to post-quantum cryptography, transitioning products to post-quantum algorithms are required. Unfortunately, some cryptographic algorithms and particularly algorithms for creating and verifying digital signatures are difficult to migrate due to limited update possibilities. In particular, it might not be possible to update some pre-quantum cryptographic algorithms to post-quantum algorithms due to issues concerning interoperability, resources or certification. Hence, there is a need for solutions that are able to handle such cases.

It is an object of the invention to provide a method for cryptographic protection of a data exchange between a first entity and a second entity where the data is protected in a novel manner against cryptographic attacks, such as man in the middle attacks.

This object is solved by the method according to claim 1. Preferred embodiments of the invention are defined in the dependent claims.

The method according to the invention provides a cryptographic protection of a data exchange between a first entity and a second entity. E.g., the first entity may be a server and the second entity may be a client or vice versa. A signing key pair comprising a private signing key and a public signing key belongs to (i.e. is owned by) the first entity whereas a KEM key pair comprising a private KEM key and a public KEM key belongs to (i.e. is owned by) the second entity. The KEM key pair is generated by a key encapsulation mechanism, i.e. the generation procedure of the key encapsulation mechanism. The method according to the invention comprises steps a) to g) as described in the following.

In step a), the first entity signs first data with the private signing key resulting in a first signature. Here and in the following, the term signature refers to a digital signature. In step b), the first entity is provided with a first symmetric key and a first ciphertext. The first symmetric key and the first ciphertext are generated using an encapsulation procedure of the key encapsulation mechanism, where the encapsulation procedure calculates a first shared secret and the first ciphertext from the public KEM key. The first shared secret may correspond to the first symmetric key. Alternatively, a known key derivation function may be used to derive the first symmetric key from the first shared secret. In one variant, the first entity performs the encapsulation procedure by itself. In an alternative variant, a third entity (e.g. a proxy) performs the encapsulation procedure and provides the first shared secret and the first ciphertext to the first entity.

In step c), the first entity encrypts at least the first signature with an encryption procedure which uses the first symmetric key, resulting in a first piece of information comprising the encrypted first signature and data corresponding to the first data. Any known symmetric encryption algorithm may be used for this encryption procedure. Preferably, an AEAD algorithm (AEAD = Authenticated Encryption with Associated Data) is used. An AEAD algorithm is capable of encrypting data and providing the encrypted data with an integrity protection. The integrity protection generates a code for the corresponding data. This code enables a check whether the data has been manipulated after the generation of the code. An example of an AEAD algorithm is AES-GCM (AES = Advanced Encryption Standard; GCM = Galois/Counter Mode).

In step d), the first entity transmits the first ciphertext and the first piece of information to the second entity. In step e), the second entity is provided with the first symmetric key. The first symmetric key is generated using a decapsulation procedure of the key encapsulation mechanism, where the decapsulation procedure calculates the first shared secret as mentioned above from the first ciphertext transmitted in step d) and the private KEM key. The first shared secret may correspond to the first symmetric key. Alternatively, a known key derivation function may be used to derive the first symmetric key from the first shared secret. Analogously to the encapsulation procedure, the decapsulation procedure may be performed by the second entity itself. Alternatively, the decapsulation procedure may be performed by a third entity, e.g. a proxy, where the third entity provides the generated first shared secret to the second entity.

In step f), the second entity decrypts at least the encrypted first signature with a decryption procedure which uses the first symmetric key provided in step e), resulting in the first data and the first signature. In step g), the second entity verifies the first signature decrypted in step f) with the public signing key. Generally, the signature generation and verification can be done with different algorithms (e.g. RSA, ECDSA, etc.) which are well-known to a skilled person. The verification is successful in case that the first signature could be identified as a correct and valid signature.

The method according to the invention proposes the use of a key encapsulation mechanism for encrypting a digital signature, thus preventing digital signatures to be sent in plaintext. This enables a high protection of signed data against cryptographic attacks like man in the middle attacks. The method of the invention works for every signature algorithm (i.e. every algorithm for signing the first data and verifying the first signature) and every key encapsulation mechanism. The method of the invention is particularly advantageous in case that the key encapsulation mechanism is considered to be more secure compared with the signature algorithm. An example for this case would be a pre-quantum signature algorithm and post-quantum key encapsulation mechanism. But there may exist many other cases, where the key encapsulation mechanism is more secure than the signature algorithm (even if both are post-quantum secure, e.g., if a signature mechanism gets somehow broken or less secure in the future).

In a particularly preferred variant, signing the first data in step a) and verifying the first signature in step g) provide a lower security level than the key encapsulation mechanism. In another variant, signing the first data in step a) and verifying the first signature in step g) are based on a pre-quantum algorithm, such as RSA or ECC, and/or the key encapsulation mechanism is based on a post-quantum algorithm, such as ML-KEM (Module-Lattice-Based Key-Encapsulation Mechanism). An example of ML-KEM is Kyber. This embodiment can provide an efficient protection of signatures generated by a pre-quantum algorithm against post-quantum cryptographic attacks by using a post-quantum key encapsulation mechanism which provides a symmetric key for encrypting the signature.

In a preferred embodiment, the encryption procedure in the above step c) provides the encrypted first signature or the data corresponding to the first data with an integrity protection, e.g. by using the above AEAD algorithm. Alternatively, the encryption procedure in the above step c) provides the encrypted first signature or the data corresponding to the first data without an integrity protection.

In another embodiment, the data corresponding to the first data is the (unencrypted) first data. Alternatively, the data corresponding to the first data may be the first data encrypted with the encryption procedure in step c). Hence, the first data may be additionally protected by encryption.

In another preferred embodiment, besides the verification of the first signature, a confirmation is transmitted in step g) from the second entity to the first entity in case that the first signature has been successfully verified. This confirmation informs the first entity about a successful verification of the first signature. The confirmation may be encrypted using the same encryption procedure as in step c).

As described above, the method of the invention provides a cryptographic protection for first data transmitted from the first entity to the second entity. In the same way, a cryptographic protection may be provided for second data transmitted from the second entity to the first entity. The cryptographic protection of the second data may be based on a first embodiment or a second embodiment as described in the following.

The first embodiment uses a further signing key pair, i.e. a signing key pair different from the above signing key pair. Furthermore, the first embodiment uses a further KEM key pair, i.e. a KEM key pair different from the above KEM key pair. The further signing key pair comprises a further private signing key and a further public signing key belonging to the second entity whereas the further KEM key pair comprises a further private KEM key and a further public KEM key belonging to the first entity. The further KEM key pair is generated by the key encapsulation mechanism. In the method according to the first embodiment, after having performed steps a) to g), the following steps h) to n) are performed.

In step h), the second entity signs second data with the further private signing key resulting in a second signature. In step i), the second entity is provided with a second symmetric key and a second ciphertext. The second symmetric key and the second ciphertext are generated using an encapsulation procedure of the key encapsulation mechanism, where the encapsulation procedure calculates a second shared secret and the second ciphertext from the further public KEM key. The second shared secret may correspond to the second symmetric key. Alternatively, a known key derivation function may be used to derive the second symmetric key from the second shared secret. The encapsulation procedure may be performed by the second entity itself. Alternatively, the encapsulation procedure may be performed by a third entity (e.g. a proxy) where the third entity provides the second symmetric key and the second ciphertext to the second entity.

In a step j), the second entity encrypts at least the second signature with an encryption procedure which uses the second symmetric key, resulting in a second piece of information comprising the encrypted second signature and data corresponding to the second data. The encryption procedure may be the same encryption procedure as used in the above step c). E.g., an AEAD algorithm, such as AES-GCM, may be used as the encryption procedure.

In step k), the second entity transmits the second ciphertext and the second piece of information to the first entity. In step I), the first entity is provided with the second symmetric key. The second symmetric key is generated using a decapsulation procedure of the key encapsulation mechanism, where the decapsulation procedure calculates the second shared secret as mentioned above from the second ciphertext transmitted in step k) and the further private KEM key. The second shared secret may correspond to the second symmetric key. Alternatively, a known key derivation function may be used to derive the second symmetric key from the second shared secret. Analogously to the encapsulation procedure, the decapsulation procedure may be performed by the first entity itself. Alternatively, the decapsulation procedure may be performed by a third entity, e.g. a proxy, where the third entity provides the second shared secret to the first entity.

In step m), the first entity decrypts at least the encrypted signature with a decryption procedure which uses the second symmetric key provided in step I), resulting in the second data and the second signature. In a step n), the first entity verifies the second signature encrypted in step m) with a known method using the further public signing key.

The method of the first embodiment enables the cryptographic protection of second data transmitted from the second entity to the first entity analogously to the cryptographic protection of the first data transmitted from the first entity to the second entity.

In a preferred variant of the first embodiment, signing the second data in step h) and verifying the second signature in step n) provide a lower security level than the key encapsulation mechanism or wherein signing the second data in step h) and verifying the second signature in step n) are based on a pre-quantum algorithm (e.g. RSA or ECDSA, etc.) and/or the key encapsulation mechanism is based on a post-quantum algorithm. In another preferred variant of the first embodiment, the encryption procedure in step j) provides the encrypted second signature and/or the data corresponding to the second data with an integrity protection, e.g. by using the above AEAD algorithm. Alternatively, the encryption procedure in the above step j) provides the encrypted first signature or the data corresponding to the first data without an integrity protection.

In another preferred variant of the first embodiment, the data corresponding to the second data is the (unencrypted) second data. Alternatively, the data corresponding to the second data may be the second data encrypted with the encryption procedure in step j).

In another preferred variant of the first embodiment, a confirmation is transmitted in step n) from the first entity to the second entity in case that the second signature has been successfully verified so that the second entity is informed about this successful verification.

In the second embodiment as mentioned above, second data transmitted from the second entity to the first entity are cryptographically protected based on a procedure which is an alternative to the procedure of the first embodiment. The second embodiment uses a further signing key pair comprising a further private signing key and a further public signing key where the further signing key pair belongs to the second entity. Contrary to the first embodiment, the second embodiment does not require a further KEM key pair. In the second embodiment, after having performed the above steps a) to g), the following steps h') to l') are performed.

In step h'), the second entity signs second data with the further private signing key resulting in a second signature. In step i'), the second entity encrypts at least the second signature with an encryption procedure which uses the first symmetric key provided in the above step e), resulting in a second piece of information comprising the encrypted second signature and data corresponding to the second data. The encryption procedure may be the same encryption procedure as used in the above step c).

In step j'), the second entity transmits the second piece of information to the first entity. In step k'), the first entity decrypts at least the encrypted second signature with a decryption procedure which uses the first symmetric key provided in step b), resulting in the second data and the second signature. In step l'), the first entity verifies the second signature decrypted in the above step k') with a known method using the further public signing key.

The method according to the second embodiment has the advantage that there is no need for a further KEM key pair used for generating a second symmetric key for encrypting a second signature. Instead, the first symmetric key used for encrypting the first signature is also used for encrypting the second signature.

In a preferred variant of the second embodiment, signing the second data in step h') and verifying the second signature in step l') provide a lower security level than the key encapsulation mechanism or wherein signing the second data in step h') and verifying the second signature in step l') are based on a pre-quantum algorithm (e.g. RSA or ECDSA, etc.) and/or the key encapsulation mechanism is based on a post-quantum algorithm. In another preferred variant of the second embodiment, the encryption procedure in step i') provides the encrypted second signature and/or the data corresponding to the second data with an integrity protection. This can e.g. be achieved by an AEAD algorithm. Alternatively, the encryption procedure in the above step i') provides the encrypted first signature or the data corresponding to the first data without an integrity protection.

In another variant of the second embodiment, the data corresponding to the second data is the (unencrypted) second data. Alternatively, the data corresponding to the second data is the second data encrypted with the encryption procedure in step i').

In another variant of the second embodiment, a confirmation is transmitted in step l') from the first entity to the second entity in case that the second signature has been successfully verified so that the second entity is informed about the successful verification.

Besides the above method, the invention refers to a system for cryptographic protection of a data exchange between a first entity and a second entity, wherein a signing key pair comprising a private signing key and a public signing key belongs to the first entity and a KEM key pair comprising a private KEM key and a public KEM key generated by a key encapsulation mechanism belongs to the second entity. The system comprises the first entity and the second entity and is configured to perform a method according to the invention or one or more preferred embodiments thereof.

In the following, embodiments of the invention will be described in detail with respect to the accompanying drawings wherein:
- Fig. 1: shows a diagram illustrating the data exchange according to an embodiment of the invention;
- Fig. 2: shows a diagram illustrating the data exchange according to another embodiment of the invention; and
- Fig. 3: shows a diagram illustrating the data exchange according to yet another embodiment of the invention.

The embodiments described in the following refer to a data exchange between a first entity A and a second entity B. The first entity A may be a server and the second entity B may be a client or vice versa. The second entity B would like to verify a digital signature associated with data stemming from the first entity A, e.g. because of the installation of a firmware update or for authentication purposes. The first entity A has generated a signing key pair KPC for digital signatures comprising a private signing key SKC and a public signing key PKC. The second entity B has generated a KEM key pair KPM by a corresponding generation procedure of a key encapsulation mechanism which is preferably based on a post-quantum algorithm. The KEM key pair KPM comprises a private KEM key SKM and a public KEM key PKM. The first entity A and the second entity B trust their public keys PKM and PKC mutually. This can be achieved by securely storing a KEM certificate for the public KEM key PKM in the first entity A and by securely storing a certificate for the public signing key PKC in the second entity B.

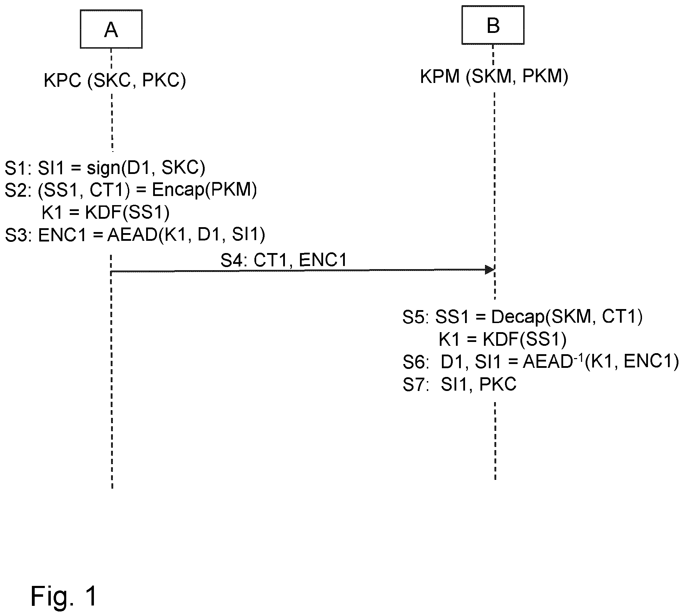

In step S1 of the method according to Fig. 1, the first entity A signs first data D1 to be transmitted to the second entity B with the private signing key SKC, e.g. by a pre-quantum algorithm. Step S1 results in a corresponding first signature SI1, i.e. SI1 = sign(D1, SKC). In step S2, the first entity A generates from the public KEM key PKM by the encapsulation procedure Encap of the key encapsulation mechanism a first shared secret SS1 as well as a first ciphertext CT1. Furthermore, a first symmetric key K1 is derived in step S2 from the first shared secret SS1 with a well-known key derivation function KDF. In an alternative embodiment, the encapsulation procedure Encap may directly provide the first symmetric key K1.

In step S3, the first entity A calculates a first piece of information ENC1 by applying an encryption procedure AEAD in the form of an AEAD algorithm to the first data D1 and the first signature SI1. The encryption procedure AEAD uses the first symmetric key for encryption. The first piece of information ENC1 includes the encrypted first data and the encrypted first signature together with an integrity protection. In an alternative embodiment, only the first signature SI1 is encrypted by the encryption procedure AEAD and the first data D1 remain unencrypted. Furthermore, in another variant, the first encrypted signature is not provided with an integrity protection and/or the first data (encrypted or unencrypted) is not provided by an integrity protection, either.

In step S4, the first entity A transmits the first ciphertext CT1 generated in step S2 and the first piece of information ENC1 generated in step S3 to the second entity B. In step S5, the second entity B generates the first shared secret SS1 from the private KEM key SKM and the first ciphertext CT1 which is transmitted in step S4. Thereafter, the first symmetric key K1 is calculated by applying the same key derivation function KDF as in step S2 to the first shared secret SS1. In an alternative embodiment, the decapsulation procedure Decap may directly provide the first symmetric key K1.

In step S6, the second entity B decrypts the first piece of information ENC1 transmitted in step S4 by a decryption function AEAD⁻¹ which uses the first symmetric key K1, resulting in decrypted first data D1 and the decrypted first signature SI1. In step S7, the second entity B verifies the first signature SI1 based on the public signing key PKC. This may be expressed by Verify_signature(SI1, PKC). In an optional step, a confirmation is transmitted from the second entity B to the first entity A in case that the verification was successful.

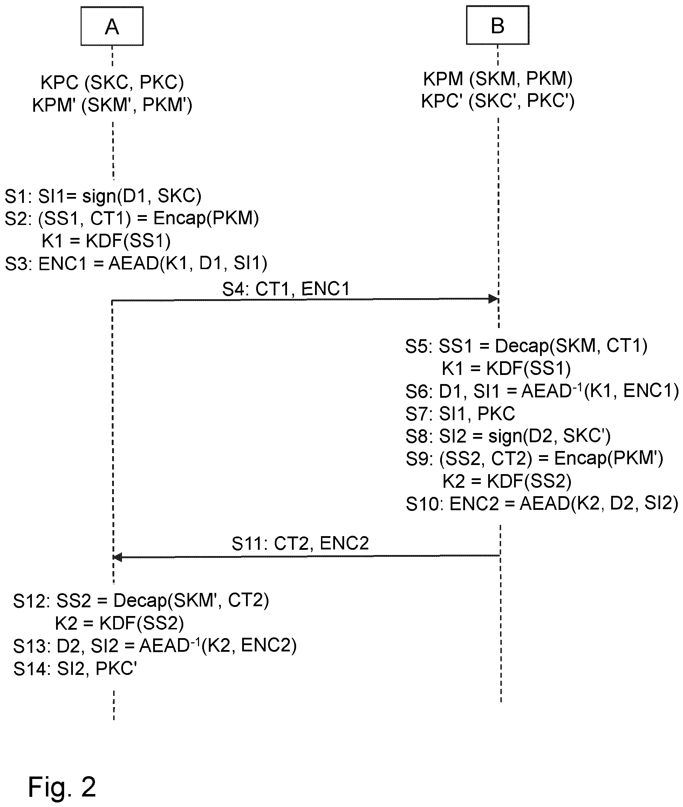

Fig. 2 shows another embodiment of the invention. In this embodiment, the steps of the method of Fig. 1 are analogously performed for second data to be transmitted from the second entity B to the first entity A. To do so, the first entity A has generated a further KEM key pair KPM' comprising a further private KEM key SKM' and a further public KEM key PKM'. Furthermore, the second entity B has generated a further signing key pair KPC' comprising a further private KEM key SKC' and a further public KEM key PKC'. The first entity A and the second entity B mutually trust their further public keys PKM' and PKC'. To do so, the first entity A has securely stored a certificate based on the further public signing key PKC' and the second entity B has securely stored a certificate based on the further public KEM key PKM'.

Steps S1 to S7 shown in Fig. 2 correspond to steps S1 to S7 as shown in Fig. 1. Hence, reference is made to the description of Fig. 1 above. After having verified the first signature SI1 based on the public signing key PKC in step S7, the method of Fig. 2 proceeds with steps S8 to S14. In step S8, the second entity B signs second data D2 to be transmitted to the first entity A by the further private signing key SKC' resulting in a second signature SI2, i.e . SI2 = sign(D2, SKC'). In step S9, the second entity B calculates from the further public KEM key PKM' a second shared secret SS2 as well as a second ciphertext CT2 by the encapsulation procedure Encap of the key encapsulation mechanism. Thereafter, a second symmetric key K2 is derived from the second shared secret SS2 by a key derivation function KDF. Alternatively, the encapsulation procedure Encap may directly provide the second symmetric key K2. In a further variant, both the first shared secret SS1 and the second shared secret SS2 may be used to derive the symmetric key K2 by the key derivation function, i.e. K2 = KDF(SS1, SS2),

In step S10, the second entity B generates a second piece of information ENC2 by encrypting the second data D2 and the second signature SI2 by an encryption procedure AEAD using the second symmetric key K2. The encryption procedure is preferably an AEAD algorithm so that the second encrypted data and the second encrypted signature are additionally provided with an integrity protection. Instead of encrypting both the second data D2 and the second signature SI2, only the second signature SI2 may encrypted. Furthermore, in another variant, an integrity protection is not provided for the second data (encrypted or unencrypted) and/or for the second encrypted signature.

The second piece of information ENC2 determined in step S10 is transmitted in step S11 together with the second ciphertext CT2 from the second entity B to the first entity A. In step S12, the first entity A calculates the second shared secret SS2 from the further private KEM key SKM' and the second ciphertext CT2 by the decapsulation procedure Decap of the key encapsulation mechanism. Thereafter, the second symmetric key K2 is derived from the second shared secret SS2 by the same key derivation function KDF used before in step S9. Alternatively, the decapsulation procedure Decap may directly provide the second symmetric key K2.

In step S13, a decryption procedure AEAD⁻¹ is applied to the second piece of information ENC2 using the symmetric key K2, resulting in the unencrypted second data D2 and the unencrypted second symmetric signature SI2. Finally, in step S14, the second symmetric signature SI2 is verified based on the further public signing key PKC'. In an optional step, a confirmation may be sent from the first entity A to the second entity B in case of a successful verification in step S14.

The method of Fig. 2 provides a cryptographic protection for both first data transmitted from the first entity A to the second entity B and second data transmitted from the entity B to the entity A. To do so, besides the signing key pair KPC and the KEM key pair KPM, a further signing key pair KPC' and a further KEM key pair KPM' are used.

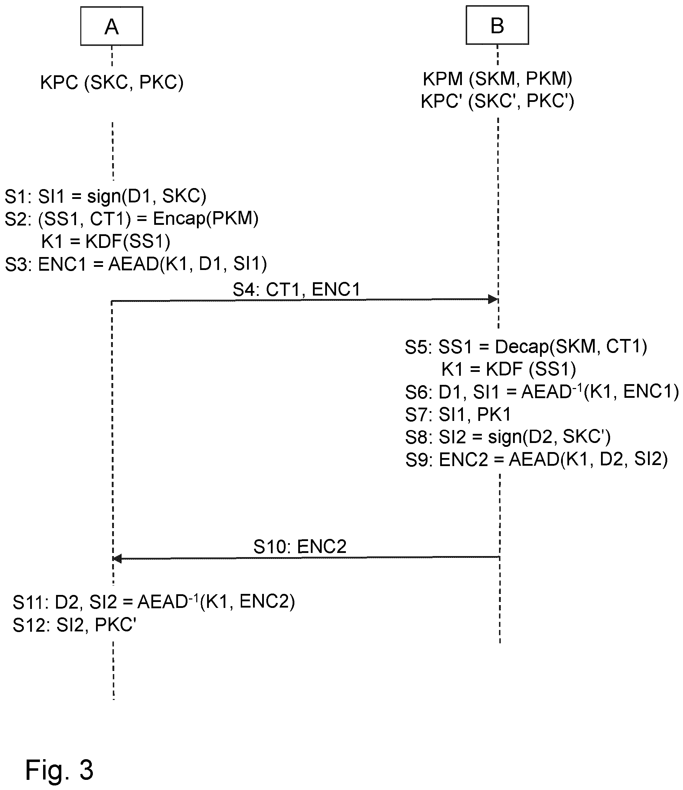

Fig. 3 shows a modification of the embodiment of Fig. 2 where the second data D2 is cryptographically protected without the need of a further KEM key pair KPM'. Thus, besides the key pairs KPC and KPM, only one further key pair in the form of a further signing key pair KPC' is generated by the second entity B. The further signing key pair KPC' comprises a further private signing key SKC' and a further public signing key PKC'. The first entity A trusts the further public signing key PKC' by securely storing a certificate for the further public signing key PKC'.

Steps S1 to S7 of Fig. 3 correspond to steps S1 to S7 as shown in Fig. 1 so that reference is made to the description of Fig. 1. After having verified the first signature SI1 based on the signing public key PKC, the method of Fig. 3 proceeds with steps S8 to S12. In step S8, second data D2 is signed with the further private signing key SKC' resulting in a second signature SI2. In step S9, a second piece of information ENC2 is generated in the same way as in step S10 of Fig. 2 with the only difference that, instead of the second symmetric key K2, the first symmetric key K1 which has been derived before in step S5 is used for encryption.

In step S10, the second entity B transmits the second piece of information ENC2 to the first entity A. In step S11, the first entity A decrypts the second piece of information ENC with a decryption algorithm AEAD⁻¹ which uses the first symmetric key K1, thus resulting in unencrypted second data D2 and the unencrypted second symmetric key SI2. Thereafter, the first entity A verifies the second signature SI2 based on the further public signing PKC'. In an optional step, a confirmation may be sent from the entity A to the entity B in case that the verification was successful. In comparison to the method of Fig. 2, the method of Fig. 3 has the advantage that fewer key pairs need to be generated and that a key encapsulation mechanism is not necessary for the second data.

The embodiments as described in the foregoing have several advantages. Particularly, an efficient cryptographic protection is provided for data transmitted between a first entity and a second entity by encrypting a signature generated for the data based on a symmetric key provided by a key encapsulation mechanism. The method of the invention is particularly advantageous during the transition phase from pre-quantum computing to post-quantum computing in case that the key encapsulation mechanism is a post-quantum algorithm like ML-KEM and the signature algorithm is a pre-quantum algorithm like RSA or ECC. In this case, the digital signature is sent in a post-quantum encrypted form to the corresponding recipient (first entity or second entity) so that it cannot be intercepted or replaced with another signature by a cryptographic attack which uses a quantum computer. Hence, only a secure post-quantum key encapsulation mechanism is required in case that the digital signature algorithm cannot be updated immediately or at all. This has the benefit that changes for the digital signature algorithms and the underlying certificate management procedures and PKI infrastructure are not needed since traditional pre-quantum certificates such as X.509 certificates can be securely used within the post-quantum KEM channel. For example with Figure 2, the first data D1 may be a certificate signing request (CSR) and the second D2 may be the issued certificate. In this case, the first entity A would be the end entity that requests a certificate and second entity B is a certificate authority (CA). Furthermore, both data D1 and D2 should preferably be confidentiality protected in this case and for this example.

The invention may also be used in case that a (pre- or post-quantum) digital signature algorithm turns out to be weak or broken. In this case, it is sufficient that the key encapsulation mechanism (pre- or post-quantum) is secure.

## Claims

1. A method for cryptographic protection of a data exchange between a first entity (A) and a second entity (B), wherein a signing key pair (KPC) comprising a private signing key (SKC) and a public signing key (PKC) belongs to the first entity (A) and a KEM key pair (KPM) comprising a private KEM key (SKM) and a public KEM key (PKM) generated by a key encapsulation mechanism belongs to the second entity (B), the method comprising the following steps:
a) signing, by the first entity (A), first data (D1) with the private signing key (SKC) resulting in a first signature (SI1);
b) providing the first entity (A) with a first symmetric key (K1) and a first ciphertext (CT1), where the first symmetric key (K1) and the first ciphertext (CT1) are generated using an encapsulation procedure (Encap) of the key encapsulation mechanism, where the encapsulation procedure (Encap) calculates a first shared secret (SS1) and the first ciphertext (CT1) from the public KEM key (PKM);
c) encrypting, by the first entity (A), at least the first signature (SI1) with an encryption procedure (AEAD) which uses the first symmetric key (K1), resulting in a first piece of information (ENC1) comprising the encrypted first signature and data corresponding to the first data (D1);
d) transmitting, by the first entity (A), the first ciphertext (CT1) and the first piece of information (ENC1) to the second entity (B);
e) providing the second entity (B) with the first symmetric key (K1), where the first symmetric key (K1) is generated using a decapsulation procedure (Decap) of the key encapsulation mechanism, where the decapsulation procedure (Decap) calculates the first shared secret (SS1) from the first ciphertext (CT1) transmitted in step d) and the private KEM key (SKM);
f) decrypting, by the second entity (B), at least the encrypted first signature with a decryption procedure (AEAD⁻¹) which uses the first symmetric key (K1) provided in step e), resulting in the first data (D1) and the first signature (SI1);
g) verifying, by the second entity (B), the first signature (SI1) decrypted in step f) with the public signing key (PKC).

2. The method according to claim 1, wherein signing the first data (D1) in step a) and verifying the first signature (SI1) in step g) provide a lower security level than the key encapsulation mechanism or wherein signing the first data (D1) in step a) and verifying the first signature (SI1) in step g) are based on a pre-quantum algorithm and/or the key encapsulation mechanism is based on a post-quantum algorithm.

3. The method according to claim 1 or 2, wherein the encryption procedure (AEAD) in step c) provides the encrypted first signature and/or the data corresponding to the first data (D1) with or without an integrity protection.

4. The method according to one of the preceding claims, wherein the data corresponding to the first data (D1) is the first data, or wherein the data corresponding to the first data (D1) is the first data (D1) encrypted with the encryption procedure (AEAD) in step c).

5. The method according to one of the preceding claims, wherein a confirmation is transmitted in step g) from the second entity (B) to the first entity (A) in case that the first signature (SI1) has been successfully verified.

6. The method according to one of the preceding claims, wherein a further signing key pair (KPC') comprising a further private signing key (SKC') and a further public signing key (PKC') belongs to the second entity (B) and a further KEM key pair (KPM') comprising a further private KEM key (SKM') and a further public KEM key (PKM') generated by the key encapsulation mechanism belongs to the first entity (A) and wherein, after having performed steps a) to g), the following steps are performed:
h) signing, by the second entity (B), second data (D2) with the further private signing key (SKC') resulting in a second signature (SI2);
i) providing the second entity (B) with a second symmetric key (K2) and a second ciphertext (CT2), where the second symmetric key (K2) and the second ciphertext (CT2) are generated using an encapsulation procedure (Encap) of the key encapsulation mechanism, where the encapsulation procedure (Encap) calculates a second shared secret (SS2) and the second ciphertext (CT2) from the further public KEM key (PKM');
j) encrypting, by the second entity (B), at least the second signature (SI2) with an encryption procedure (AEAD) which uses the second symmetric key (K2), resulting in a second piece of information (ENC2) comprising the encrypted second signature and data corresponding to the second data (D2);
k) transmitting, by the second entity (B), the second ciphertext (CT2) and the second piece of information (ENC2) to the first entity (A);
l) providing the first entity (A) with the second symmetric key (K2), where the second symmetric key (K2) is generated using a decapsulation procedure (Decap) of the key encapsulation mechanism, where the decapsulation procedure (Decap) calculates the second shared secret (SS2) from the second ciphertext (CT2) transmitted in step k) and the further private KEM key (SKM');
m) decrypting, by the first entity (A), at least the encrypted second signature with a decryption procedure (AEAD⁻¹) which uses the second symmetric key (K2) provided in step I), resulting in the second data (D2) and the second signature (SI2);
n) verifying, by the first entity (A), the second signature (SI2) encrypted in step m) with the further public signing key (PKC').

7. The method according to claim 6, wherein signing the second data (D2) in step h) and verifying the second signature (SI2) in step n) provide a lower security level than the key encapsulation mechanism or wherein signing the second data (D2) in step h) and verifying the second signature (SI2) in step n) are based on a pre-quantum algorithm and/or the key encapsulation mechanism is based on a post-quantum algorithm.

8. The method according to claim 6 or 7, wherein the encryption procedure (AEAD) in step j) provides the encrypted second signature and/or the data corresponding to the second data (D2) with or without an integrity protection.

9. The method according to one of claims 6 to 8, wherein the data corresponding to the second data (D2) is the second data (D2), or wherein the data corresponding to the second data (D2) is the second data (D2) encrypted with the encryption procedure (AEAD) in step j).

10. The method according to one of claims 6 to 9, wherein a confirmation is transmitted in step n) from the first entity (A) to the second entity (B) in case that the second signature (SI2) has been successfully verified.

11. The method according to one of claims 1 to 5, wherein a further signing key pair (KPC') comprising a further private signing key (SKC') and a further public signing key (PKC') belongs to the second entity (B) and wherein, after having performed steps a) to g), the following steps are performed:
h') signing, by the second entity (B), second data (D2) with the further private signing key (SKC') resulting in a second signature (SI2);
i') encrypting, by the second entity (B), at least the second signature (SI2) with an encryption procedure (AEAD) which uses the first symmetric key (K1) provided in step e), resulting in a second piece of information (ENC2) comprising the encrypted second signature and data corresponding to the second data (D2);
j') transmitting, by the second entity (B), the second piece of information (ENC2) to the first entity (A);
k') decrypting, by the first entity (A), at least the encrypted second signature with a decryption procedure (AEAD⁻¹) which uses the first symmetric key (K1) provided in step b), resulting in the second data (D2) and the second signature (SI2);
I') verifying, by the first entity (A), the second signature (SI2) decrypted in step k') with the further public signing key (PKC').

12. The method according to claim 11, wherein signing the second data (D2) in step h') and verifying the second signature (SI2) in step l') provide a lower security level than the key encapsulation mechanism or wherein signing the second data (D2) in step h') and verifying the second signature (SI2) in step l') are based on a pre-quantum algorithm and/or the key encapsulation mechanism is based on a post-quantum algorithm.

13. The method according to claim 11 or 12, wherein the encryption procedure (AEAD) in step i') provides the encrypted second signature and/or the data corresponding to the second data (D2) with or without an integrity protection.

14. The method according to one of claims 11 to 13, wherein the data corresponding to the second data (D2) is the second data, or wherein the data corresponding to the second data (D2) is the second data (D1) encrypted with the encryption procedure (AEAD) in step i').

15. The method according to one of claims 11 to 14, wherein a confirmation is transmitted in step l') from the first entity (A) to the second entity (B) in case that the second signature (SI2) has been successfully verified.

16. A system for cryptographic protection of a data exchange between a first entity (A) and a second entity (B), wherein a signing key pair (KPC) comprising a private signing key (SKC) and a public signing key (PKC) belongs to the first entity (A) and a KEM key pair (KPM) comprising a private KEM key (SKM) and a public KEM key (PKM) generated by a key encapsulation mechanism belongs to the second entity (B), where the system is configured to perform a method comprising the following steps:
a) signing, by the first entity (A), first data (D1) with the private signing key (SKC) resulting in a first signature (SI1);
b) providing the first entity (A) with a first symmetric key (K1) and a first ciphertext (CT1), where the first symmetric key (K1) and the first ciphertext (CT1) are generated using an encapsulation procedure (Encap) of the key encapsulation mechanism, where the encapsulation procedure (Encap) calculates a first shared secret (SS1) and the first ciphertext (CT1) from the public KEM key (PKM);
c) encrypting, by the first entity (A), at least the first signature (SI1) with an encryption procedure (AEAD) which uses the first symmetric key (K1), resulting in a first piece of information (ENC1) comprising the encrypted first signature and data corresponding to the first data (D1);
d) transmitting, by the first entity (A), the first ciphertext (CT1) and the first piece of information (ENC1) to the second entity (B);
e) providing the second entity (B) with the first symmetric key (K1), where the first symmetric key (K1) is generated using a decapsulation procedure (Decap) of the key encapsulation mechanism, where the decapsulation procedure (Decap) calculates the first shared secret (SS1) from the first ciphertext (CT1) transmitted in step d) and the private KEM key (SKM);
f) decrypting, by the second entity (B), at least the encrypted first signature with a decryption procedure (AEAD⁻¹) which uses the first symmetric key (K1) provided in step e), resulting in the first data (D1) and the first signature (SI1);
g) verifying, by the second entity (B), the first signature (SI1) decrypted in step f) with the public signing key (PKC).

17. The system according to claim 16, wherein the system is configured to perform a method according to one of claim 2 to 15.
